# EUROPÄISCHE PATENTSCHRIFT

(11) **EP 0 695 150 B1**
(45) Veröffentlichungstag und Bekanntmachung des Hinweises auf die Patenterteilung: **20.08.1997**
(21) Anmeldenummer: 94914258.2
(22) Anmeldetag: 21.03.1994
(51) Int. Cl.: A61C 17/028

(54) **EINRICHTUNG ZUR FRISCHWASSERVERSORGUNG ZUMINDEST EINES VERBRAUCHERS**
DEVICE FOR SUPPLYING FRESH WATER TO AT LEAST ONE USER
DISPOSITIF PERMETTANT D'ALIMENTER AU MOINS UN CONSOMMATEUR EN EAU FRAICHE

(30) Priorität: 30.03.1993 AT 638/93
(43) Veröffentlichungstag der Anmeldung: 07.02.1996
(73) Patentinhaber: Trawöger, Werner, 6173 Oberperfuss (AT); PREGENZER, Bruno, 6173 Oberperfuss (AT)
(72) Erfinder: Trawöger, Werner, 6173 Oberperfuss (AT); PREGENZER, Bruno, 6173 Oberperfuss (AT)
(74) Vertreter: Torggler, Paul, Dr.
(86) Internationale Anmeldenummer: AT9400029
(87) Internationale Veröffentlichungsnummer: WO9423139

(56) Entgegenhaltungen:
- DE-A- 3 916 743
- US-A- 3 540 437
- US-A- 3 568 667
- US-A- 3 777 746

## Beschreibung

Die Erfindung betrifft eine Einrichtung zur Frischwasserversorgung zumindest eines Verbrauchers, insbesondere an einem zahnärztlichen Behandlungsplatz, mit einer mit einem Frischwasseranschluß verbindbaren Zuflußleitung, in der eine rückflußhindernde Freifallstrecke vorgesehen ist, und mit einer eine Dosiervorrichtung und eine Weiterfördervorrichtung aufweisenden Zuflußsteuerung, die den Wasserdruck in der Zuflußleitung vor der Freifallstrecke reduziert und nach der Freifallstrecke erhöht.

Eine derartige Einrichtung ist beispielsweise der EP-A 524 334 zu entnehmen. Die Freifallstrecke ist dabei notwendig, um einen eventuellen Rückfluß von verschmutztem, mit Bakterien kontaminiertem Wasser in das Frischwasserversorgungssystem mit Sicherheit auszuschließen. Von der Freifallstrecke wird das Wasser durch eine Pumpe zum Verbraucher gefördert. Die Freifallstrecke umfaßt einen Auffangbehälter, sodaß dem Wasser dort auch ein Reinigungs- oder Desinfektionsmittel zugegeben werden kann, dessen Rückfluß in die Frischwasserleitung ebenfalls unmöglich ist. Am Frischwasseranschluß ist ein Magnetventil vorgesehen, das abhängig vom Füllstand im Behälter geöffnet wird, an dem Füllstandsensoren vorgesehen sind. Die Füllstandsüberwachung ist daher nach der Freifallstrecke angeordnet, das heißt, die das Absperrventil steuernden Mittel sind nicht in dem das Absperrventil enthaltenden Abschnitt der Zuflußleitung vorgesehen. Dadurch kann bei Störungen der Füllstandsüberwachung Wasser im Bereich der Freifallstrecke in beliebigen Mengen austreten, wofür auch ein Überlauf vorgesehen ist.

Die Aufgabe der Erfindung liegt nun darin, den Frischwasserzufluß vor der Freifallstrecke zu überwachen und zu steuern. Das wird dadurch erreicht, daß die Dosiervorrichtung so gesteuert ist, daß sie jeweils nur dann eine Portion Wasser an die Freifallstrecke weiterleitet, wenn die Weiterfördervorrichtung eine Portion Wasser vom Ablauf der Freifallstrecke in Richtung Verbraucher fördert. Auf diese Weise wird die Freifallstrecke immer nur von einer Wassermenge passiert, die vom Verbraucher gerade benötigt wird und eine den Frischwasserzufluß steuernde Füllstandsüberwachung in einem Auffangbehälter der Freifallstrecke erübrigt sich.

In einer ersten Ausführung umfaßt die Dosiervorrichtung vorzugsweise eine vom Wasserdruck angetriebene Verdrängerpumpe. Die der Freifallstrecke zugeleitete Wassermenge entspricht dadurch jeweils dem Volumen der Pumpenkammer. Dadurch kann ein Auffangbehälter wesentlich kleiner ausgeführt werden, da er höchstens nur eine Portion des Wassers aus der Dosiervorrichtung aufnehmen muß.

In einer bevorzugten Ausführung ist vorgesehen, daß die Dosiervorrichtung einen in der Pumpenkammer bewegbaren Hubkolben, eine dem Wasserdruck entgegenwirkende Rückstellfeder und ein 3/2-Wegeventil aufweist, das wechselweise den Frischwasseranschluß mit der Dosiervorrichtung oder die Dosiervorrichtung mit dem Zulauf der Freifallstrecke verbindet. Der Frischwasseranschluß ist in der Nullstellung des 3/2-Wegeventils gesperrt. Das Ventil wird, wenn der Verbraucher Wasser benötigt, insbesondere mittels eines Elektromagneten in Durchflußstellung geschaltet, worauf der Hubkolben vom einströmenden Wasser verdrängt wird. Nach der Füllung der Pumpenkammer wird das Ventil in die Nullstellung zurückgeschaltet, sodaß sich der Durchgang zur Freifallstrecke öffnet. Die Rückstellfeder bewegt den Hubkolben in seine Ausgangsstellung und die in der Pumpenkammer enthaltene Portion Wasser wird zur Freifallstrecke gefördert. Sodann kann wieder Frischwasser in die Pumpenkammer eingeleitet werden. Der Hubkolben ist insbesondere durch eine Membran gebildet, jedoch ist auch jede andere Art von Verdrängerplatte einsetzbar.

In einer weiteren bevorzugten Ausführung umfaßt die Dosiervorrichtung ein Verdrängerpumpenpaar, dessen beiden Verdrängerpumpe so gekoppelt sind, daß sie alternierend Wasser zur Freifallstrecke fördern. Die Dosiervorrichtung bewirkt somit eine ständige, jedoch portionierte Wasserförderung durch die Freifallstrecke. Der Antrieb des Pumpenpaares kann ebenfalls durch den Wasserdruck erfolgen. Die Koppelung ermöglicht jedoch auch einen mechanischen oder elektromagnetischen Antrieb des Koppelgliedes.

Eine besonders kompakte raumsparende Lösung ergibt sich dabei dann, wenn der bzw. jeder Hubkolben ein Pumpengehäuse in zwei Pumpenkammern unterteilt, und die bzw. jede erste Pumpenkammer einen Teil der Dosiervorrichtung und die bzw. jede zweite Pumpenkammer einen Teil der Weiterfördervorrichtung bildet. Bevorzugt enthält in dieser Ausführung die zweite Pumpenkammer die Rückstellfeder und es ist je ein Rückschlagventil im Zuflußkanal und im Abflußkanal vorgesehen. Bei einem Verdrängerpumpenpaar sind die Hubkolben über ein Koppelglied verbunden. Ist das Koppelglied antreibbar, kann sich die Rückstellfeder erübrigen. Die beiden Pumpenkammern weisen bevorzugt gleiche Volumina auf. Somit saugt die Weiterfördervorrichtung bei jedem Takt des Hubkolbens ebensoviel Wasser von der Freifallstrecke ab, wie Frischwasser zur Freifallstrecke zugeführt wird, und fördert diese Menge durch den Druck des Frischwassers an den Verbraucher weiter, wenn die nächste Portion Wasser in die erste Pumpenkammer einfließt.

Dem zumindest einem Verbraucher zuzuführenden Frischwasser ist insbesondere im medizinischen Bereich oft ein Zusatzmittel (Reinigungsmittel, Desinfektionsmittel, Antischaummittel, od.dgl.) zuzugeben. Für die Herstellung einer Desinfektionsmittellösung, die in Krankenhäusern in größeren Mengen über ein Leitungsnetz zur Verfügung gestellt werden kann, ist aus der EP-A 98 419 eine Vorrichtung bekannt, die zwei miteinander einstellbar gekoppelte, beidseitig jeweils mit demselben Medium beaufschlagte Kolbenpumpen aufweist. Auf diese Weise wird dem über den Frischwasseranschluß dosierbaren Wasser ein im Mischungsverhältnis wählbares Konzentrat zudosiert.

Soll nun bei der erfindungsgemäßen Frischwasserversorgungseinrichtung ein Zusatzmittel, etwa zur Reinigung oder Desinfektion, zugegeben werden, so kann dies aus einem Behälter erfolgen, dessen Ablauf in den Ablauf der Freifallstrecke mündet. Am Zusammenfluß ist insbesondere ein zweites 3/2-Wegeventil vorgesehen, sodaß auch die Menge des Zusatzmittels dosierbar ist. Das Volumen der zweiten Pumpenkammer kann größer sein, sodaß die beidseitig des Hubkolbens geförderten Mengen in einem definierten Verhältnis zueinander stehen, oder es kann ein Überlauf vorgesehen sein, sodaß bei unregelmäßiger Dosierung des Zusatzmittels jeweils die überschüssige Menge des Frischwassers ausgeschieden wird.

In einer weiteren bevorzugten Ausführung ist vorgesehen, daß der bzw. jeder Hubkolben zwei voneinander beabstandete Verdrängerplatten aufweist. Hiedurch läßt sich zwischen den beiden Pumpenkammern ein Leckageraum ausbilden, der mit einem Abfluß, und/oder mit Leckanzeigemitteln ausgestattet ist. Der besondere Vorteil der doppelten Verdrängerplatten, die insbesondere Membranen sind, liegt dabei darin, daß die Freifallstrecke auch dann nicht überbrückt wird, wenn eine der beiden Pumpenkammern undicht wird, etwa eine Membran beschädigt wird.

Einbauten in zahnärztliche Behandlungsplätze erfordern besonders kleine Dimensionen. Eine bevorzugte Ausführung sieht daher vor, daß die beiden Pumpenkammern, die Freifallstrecke, der Zusatzmittelbehälter und die 3/2 Wegeventile in einer Baueinheit zusammengefaßt sind. Die Baueinheit weist bevorzugt einen quaderförmigen Block auf, in dem Räume und Verbindungskanäle jeweils durch insbesondere senkrecht zu einer Seitenfläche des Blockes erstellte Bohrungen gebildet sind.

Nachstehend wird nun die Erfindung anhand der Figuren der beiliegenden Zeichnungen naher beschrieben. Es zeigen:
- Fig. 1: eine schematische Darstellung der Frischwasserversorgung,
- Fig. 2: eine schematische Darstellung einer intermittierenden Frischwasserversorgung mit einem anschließenden Zwischenspeicher,
- Fig. 3: eine schematische Darstellung der Frischwasserversorgung für die Spülung und Desinfektion von Saugschläuchen,
- Fig. 4: einen Schnitt durch ein doppelkammriges Pumpengehäuse mit einem gemeinsamen Membrankolben, und
- Fig. 5: einen Schnitt durch ein doppelkammriges Pumpengehäuse und zwei Membranen, die einen Leckraum begrenzen,
- Fig. 6: einen Steuerblock in Vorderansicht,
- Fig. 7: den Steuerblock in Seitenansicht,
- Fig. 8 bis 10: Horizontalschnitte nach den Linien VIII-VIII, IX-IX und X-X der Fig. 6 und 7, und
- Fig. 11: eine Draufsicht auf den Steuerblock.

Ein oder mehrere Verbraucher 10 beliebiger Art sind mit einem Frischwasseranschluß 1 über eine Leitung 2 verbunden, die mehrere Abschnitte aufweist:
An den Anschluß 1 schließt als erster Abschnitt eine Frischwasserleitung 11 zu einem ersten Steuerventil 51 an, das ein 3/2-Wegeventil darstellt. Vom Ventil 51 erstreckt sich als zweiter Abschnitt die Frischwasserleitung 12 zu einer Verdrangerpumpe 6, aus der das Frischwasser in Portionen über das Ventil 51 dem Zulauf 21 als dritten Abschnitt der Leitung 2 einer Freifallstrecke 4 zugeführt wird. Die Verdrängerpumpe 6 und das Ventil 51 bilden eine Dosiervorrichtung 3, die bevorzugt mit einer Weiterfördervorrichtung 5 in einem Steuerblock 13 zusammengefaßt sind. Zur Weiterfördervorrichtung 5 gelangt das Frischwasser aus dem zweiten Abschnitt der Leitung 2, nämlich dem Ablauf 14 der Freifallstrecke 4, durch ein Rückschlagventil 17 und den Zuflußkanal 19, der den fünften Abschnitt der Leitung 2 darstellt. Die Weiterfördervorrichtung enthält ebenfalls eine Verdrängerpumpe, die in einem gemeinsamen Pumpengehäuse 7 mit der Verdrängerpumpe 6 kombiniert ist. Ein gemeinsamer Hubkolben 23 teilt das Pumpengehäuse 7 in zwei Pumpenkammern 8,9, wobei in der zweiten Pumpenkammer 9 eine Rückstellfeder 22 vorgesehen ist, die gegen den Wasserdruck des über die Frischwasserleitung 12 in die erste Pumpenkammer 8 eingeströmten Frischwassers wirkt. Beim Verdrängen des Frischwassers aus der ersten Pumpenkammer 8 zur Freifallstrecke 4 wird daher gleichzeitig aus der Freifallstrecke 4 Wasser in die zweite Pumpenkammer 9 eingesaugt. Beim Wiederfüllen der ersten Pumpenkammer 8 durch ensprechende Steuerung des 3/2-Wegeventiles 51 wird das Wasser aus der zweiten Pumpenkammer 9 über den Abflußkanal 20 - sechster Abschnitt der Leitung 2 - durch das Rückschlagventil 18 zum Verbraucher 10 gefördert. Gegebenenfalls kann im Abflußkanal 20 auch ein Speicherbehälter angeordnet sein, der unter Druck setzbar ist, sodaß die intermittierende Wasserförderung durch die Freifallstrecke in den Speicherbehälter in einen kontinuierlichen Flüssigkeitsstrom verwandelbar ist.

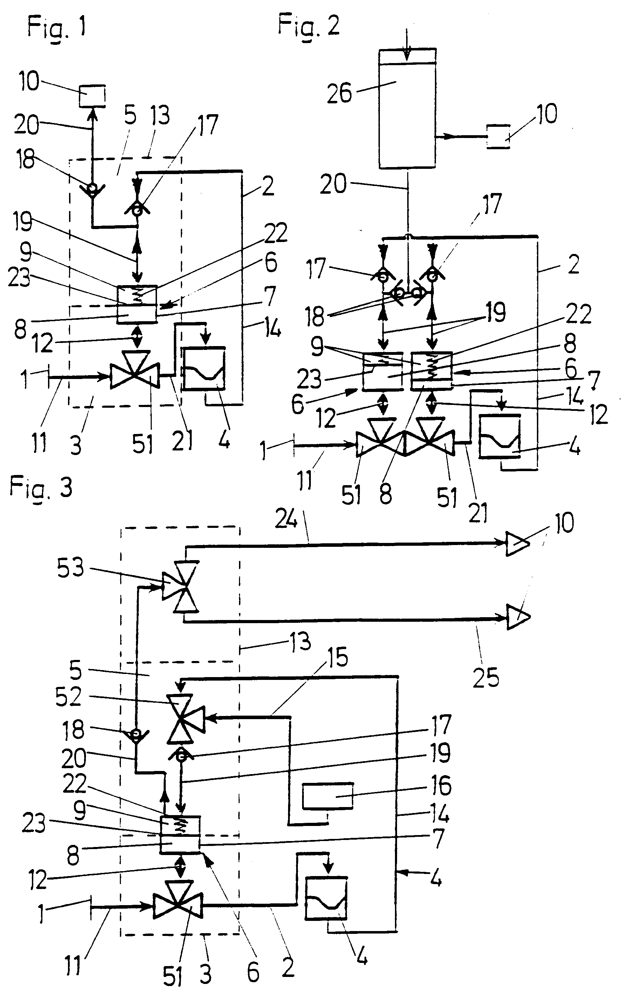

Fig. 2 zeigt eine Ausführung, in der mittels eines Verdrängerpumpenpaares 6 die Freifallstrecke 4 alternierend mit Frischwasser beschickt wird, das in den beiden Pumpenkammern 9 wieder alternierend angesaugt wird. Über den gemeinsamen Abflußkanal 20 gelangt das Wasser in einen Zwischenspeicher 26, der in beliebiger Weise zur Entnahme des Wassers mit Druck beaufschlagbar ist. Die beiden Steuerventile 51 können auch parallel an eine gegabelte Frischwasserleitung 11 angesetzt sein, wobei dann zwei Zulaufe 21 in die Freifallstrecke 4 münden. Die in Fig. 3 gezeigte Zugabe eines Zusatzmittels aus einem Behälter 16 ist in dieser Ausführung natürlich ebenso möglich.

In der Ausführung nach Fig. 3 können zwei Verbraucher 10 die beiden üblichen Saugschläuche eines Behandlungsplatzes bilden, die jeweils zur Spülung und Desinfektion mit Frischwasser versorgt werden, ein dritter Verbraucher beispielsweise eine Speischalenspülung darstellen, usw. Der Abflußkanal 20 teilt sich mittels eines 3/2-Wegeventils 53 in zwei Zweigleitungen 24,25, die nach Bedarf oder in regelmäßigen Abständen mit einer mit Frischwasser verdünnten Lösung eines Zusatzmittels versorgt werden. Das Zusatzmittel ist in einem Behälter 16 enthalten, der einen Ablauf 15 aufweist. Dieser mündet mittels eines zweiten 3/2-Wegeventils, das zwischen dem Ablauf 14 der Freifallstrecke 4 und dem Zuflußkanal 19 der zweiten Pumpenkammer 9 eingesetzt ist, in den Zuflußkanal 19. Die Zugabe des Zusatzmittels kann daher nach Bedarf dosiert weden.

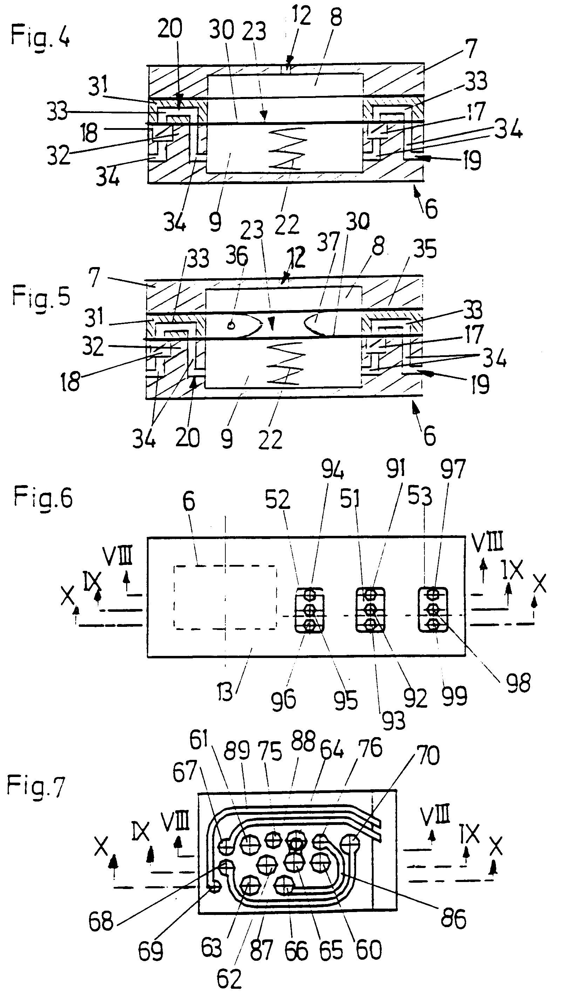

Ausführungen der kombinierten Verdrängerpumpe 6 mit zwei Pumpenkammern in einem gemeinsamen, durch eine Membran 30 des Hubkolbens unterteilten Gehäuse 7 zeigen Fig. 4 und 5. Das Gehäuse 7 weist eine Umfangswand 32 und einen Klemmring 31 auf, zwischen denen die Membran 30 ringsum geklemmt ist. Sowohl der Zufluß- als auch der Abflußkanal 19,20 in der Pumpenkammer 9 verlaufen einerseits durch die Umfangswand 32 als auch durch den Klemmring 31, wobei sie jeweils doppelt die Membran 30 im umfänglichen Klemmbereich passieren. Dies erlaubt die Ausbildung der Rückschlagventile 17,18 durch Ventilklappen der Membran 30 selbst Der Zufluß zur ersten Pumpenkammer 8 vom ersten 3/2-Wegeventil 51 aus erfolgt durch die schematisch gezeigte obere Öffnung 12. In Fig. 5 ist der Klemmring 31 zwischen zwei Membranen 30 und 35 angeordnet, die im Mittelbereich miteinander verbunden sind. Sie schließen daher einen Freiraum 37 ein, in dem eine Lecküberwachung erfolgen kann, beispielsweise durch Flüssigkeitssensoren. Diese sprechen natürlich sowohl auf Wasser aus der Pumpenkammer 8 als auch auf Wasser aus der Pumpenkammer 9 an, wobei die Freifallstrecke 4 nur dann überbrückt würde, wenn beide Kammern 8,9 gleichzeitig leck wären.

Wie erwähnt, sind die Dosiervorrichtung 3 und die Weiterfördervorrichtung 5 bevorzugt in einem Steuerblock 13 zusammengefaßt. Der quaderförmige Steuerblock 13, der in den Fig. 6 bis 11 näher beschrieben ist, trägt Befestigungsbohrungen für drei Steuerventile 51 bis 53, insbesondere 3/2-Wegemagnetventile. Dem ersten Steuerventil 51 sind drei Querkanäle 91,92 und 93, dem zweiten Steuerventil 52 drei weitere Querkanäle 94,95 und 96, und dem dritten Steuerventil 53 drei weitere Querkanäle 97,98 und 99 zugeordnet, die sich unterschiedlich weit von einer Längsschmalseite aus in den Steuerblock 13 erstrecken.

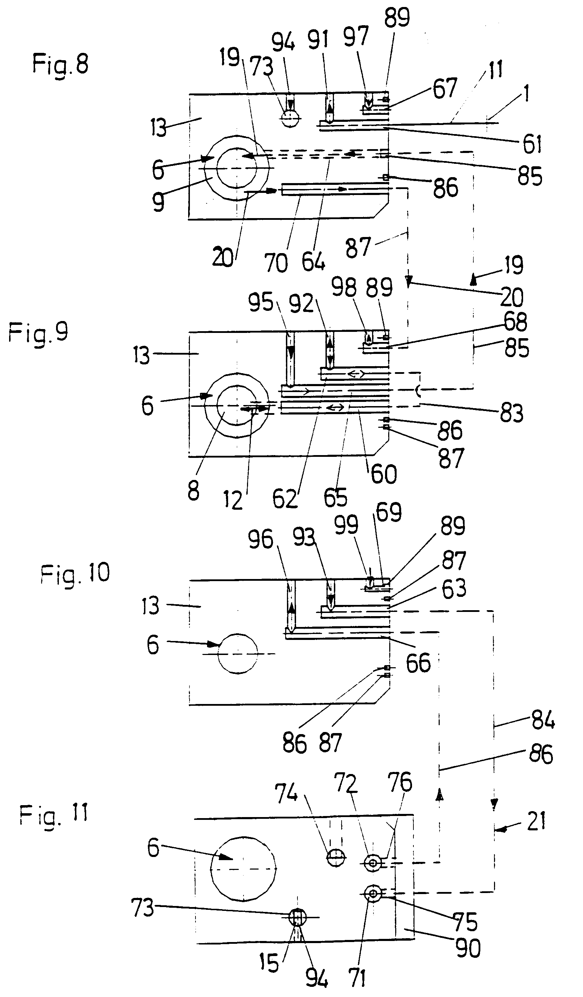

Der Steuerblock 13 weist an der Stirnseite einen Seitenteil 90 auf, der Längskanäle 60 bis 70, 75 und 76 des Steuerblockes 13 verschließt und untereinander verbindet, sowie Anschlüsse für äußere Leitungen aufweist. Wie aus Fig. 11 ersichtlich, sind auch Vertikalkanäle 71 bis 74 vorgesehen, die an der Oberseite des Steuerblockes 13 austreten. Der Vertikalkanal 71 schließt an einen Längskanal 75 und eine Verbindung 84 an, die Teile des Zulaufes 21 zur Freifallstrecke 4 sind, die beispielsweise in einem auf den Steuerblock 13 aufgesetzten Behälter ausgebildet sein kann. Vom Behälter aus führt der Ablauf 14 der Freifallstrecke 4 durch den Vertikalkanal 72, einen Längskanal 76, eine Verbindung 86 und einen weiteren Längskanal 66 zum zweiten Steuerventil 52. Durch den Vertikalkanal 73 und den Querkanal 94 führt der Ablauf 15 des Zusatzmittelbehälters 16 ebenfalls zum zweiten Steuerventil 52. Der Vertikalkanal 74 stellt eine Verbindung zur Außenluft sowie einen eventuellen Überlauf der Freifallstrecke 4 dar und mündet an der Hinterseite des Steuerblockes 13 in einen Schlauchanschluß oder dergleichen.

Die Fig.8 zeigt eine obere Schnittebene, aus der ersichtlich ist, daß dem Querkanal 91 der Längskanal 61 der Frischwasserleitung 11 zugeordnet ist. Der Querkanal 97 mündet in den mit einer stirnseitigen Anschlußverbindung 88 (Fig. 7) versehenen Längskanal 67, die alle der Zweigleitung 24 eines ersten Verbrauchers 10, beispielsweise eines Saugschlauches, zugeordnet sind. Weiters zeigt die obere Schnittebene den Längskanal 64 des Zuflußkanales 19 zur zweiten Pumpenkammer 9 sowie den Längskanal 70 des Abflußkanales 20 aus der zweiten Pumpenkammer 9.

Fig. 9 zeigt eine mittlere Schnittebene, wobei der Querkanal 95 des zweiten Steuerventils 52 in einen Längskanal 65 mündet, der über eine Verbindung 85 mit dem Längskanal 64 dem Zuflußkanal 19 zur zweiten Pumpenkammer 9 angehört. Der Querkanal 92 des ersten Steuerventiles 51 mündet in den Längskanal 62, an den eine Verbindung 83 mit dem Längskanal 60 anschließt. Die Längskanäle 60 und 62 sowie ihre Verbindung 83 sind Teile der Frischwasserleitung 12 zur ersten Pumpenkammer 8. Schließlich ist in der mittleren Schnittebene noch der Querkanal 98 des dritten Steuerventiles 53 gezeigt, der in den Längskanal 68 mündet, der über die Verbindung 87 mit dem Längskanal 70 (obere Schnittebene) verbunden ist. Die Längskanäle 68 und 70 sowie ihre Verbindung 87 sind Teile des Abflußkanales 20 aus der zweiten Pumpenkammer 9.

Fig. 10 zeigt eine dritte, untere horizontale Schnittebene durch den Steuerblock 13. Der Querkanal 93 des ersten Steuerventils 51 mündet in den Längskanal 63, der über die Verbindung 84, den Längskanal 75 und den Vertikalkanal 71 die einzelnen Portionen von Frischwasser an die Freifallstrecke 4 weiterleiten. Der Querkanal 96 des zweiten Steuerventiles 52 ist mit dem Längskanal 66 und über die Verbindung 86 und den Längskanal 76 mit dem Vertikalkanal 72 verbunden, die dem Ablauf 15 des Zusatzmittelbehälters 16 angehören. Der Querkanal 99 des dritten Steuerventils 53 mündet in den Längskanal 69, der mit einer stirnseitigen Anschlußverbindung 89 (Fig. 7) versehen ist. Diese sind Teile der Zweigleitung 25 eines zweiten Verbrauchers 10, beispielsweise eines zweiten Saugschlauches. Die in den Figuren gezeigten Pfeile geben jeweils die Strömungsrichtung an.

## Patentansprüche

1. Einrichtung zur Frischwasserversorgung zumindest eines Verbrauchers (10), insbesondere an einem zahnärztlichen Behandlungsplatz, mit einer mit einem Frischwasseranschluß (1) verbindbaren Zuflußleitung (2), in der eine rückflußhindernde Freifallstrecke (4) vorgesehen ist, und mit einer eine Dosiervorrichtung (3) und eine Weiterfördervorrichtung (5) aufweisenden Zuflußsteuerung, die den Wasserdruck in der Zuflußleitung (2) vor der Freifallstrecke (4) reduziert und nach der Freifallstrecke (4) erhöht, dadurch gekennzeichnet, daß die Dosiervorrichtung (3) so gesteuert ist, daß sie jeweils nur dann eine Portion Wasser an die Freifallstrecke (4) weiterleitet, wenn die Weiterfördervorrichtung eine Portion Wasser vom Ablauf (14) der Freifallstrecke (4) in Richtung Verbraucher (10) fördert.

2. Einrichtung nach Anspruch 1, dadurch gekennzeichnet, daß die Dosiervorrichtung (3) eine vom Wasserdruck angetriebene Verdrängerpumpe (6) aufweist.

3. Einrichtung nach Anspruch 2, dadurch gekennzeichnet, daß die Dosiervorrichtung (3) einen Hubkolben (23), eine dem Wasserdruck entgegenwirkende Rückstellfeder (22) und ein 3/2-Wegeventil (51) aufweist, das wechselweise den Frischwasseranschluß (1) mit der Dosiervorrichtung (3) oder die Dosiervorrichtung (3) mit dem Zulauf (21) der Freifallstrecke (4) verbindet.

4. Einrichtung nach Anspruch 3, dadurch gekennzeichnet, daß der Hubkolben (23) als flexible, an ihrem Umfang im Pumpengehäuse (7) gehaltene Membran (30) ausgebildet ist.

5. Einrichtung nach Anspruch 1, dadurch gekennzeichnet, daß die Dosiervorrichtung (3) ein Verdrängerpumpenpaar aufweist, und die beiden Verdrängerpumpen alternierend fördernd gekoppelt sind.

6. Einrichtung nach Anspruch 1, dadurch gekennzeichnet, daß jeder Hubkolben (23) das Pumpengehäuse (7) in eine erste und eine zweite Pumpenkammer (8,9) unterteilt, und jede erste Pumpenkammer (8) einen Teil der Dosiervorrichtung (3) und jede zweite Pumpenkammer (9) einen Teil der Weiterfördervorrichtung (5) bildet.

7. Einrichtung nach Anspruch 6, dadurch gekennzeichnet, daß die zweite Pumpenkammer (9) die Rückstellfeder (22) enthält und je ein Rückschlagventil (17,18) in ihrem an den Ablauf (14) der Freifallstrecke (4) angeschlossenen Zuflußkanal (19) sowie im Abflußkanal (20) vorgesehen ist.

8. Einrichtung nach einem der Ansprüche 1 bis 7, dadurch gekennzeichnet, daß in den Ablauf (14) der Freifallstrecke (4) der Ablauf (15) eines Zusatzmittelbehälters (16) mündet.

9. Einrichtung nach Anspruch 8, dadurch gekennzeichnet, daß die Weiterfördervorrichtung (5) ein zweites 3/2-Wegeventil (52) aufweist, das den Ablauf (14) der Freifallstrecke (4) oder den Ablauf (15) des Zusatzmittelbehälters (16) mit der zweiten Pumpenkammer (9) verbindet.

10. Einrichtung nach Anspruch 6, dadurch gekennzeichnet, daß der Hubkolben (6) zwei voneinander beabstandete Verdrängerplatten, insbesondere Membranen aufweist, zwischen denen Leckanzeigemittel vorgesehen sind.

11. Einrichtung nach einem der Ansprüche 1 bis 9, dadurch gekennzeichnet, daß die beiden Pumpenkammern (8,9), die Freifallstrecke (4), der Zusatzmittelbehälter (16) und die 3/2-Wegeventile (51,52) in einer Baueinheit (13) zusammengefaßt sind.

12. Einrichtung nach Anspruch 11, dadurch gekennzeichnet, daß die Baueinheit (13) einen Block aufweist, in dem insbesondere senkrecht zu den Außenflächen verlaufende und im Inneren ineinander übergehende Bohrungen Leitungskanäle (60 bis 76, 91 bis 99) und die Pumpenkammern (8,9) bilden.

## Claims

1. Device for supplying fresh water to at least one user (10), particularly in a dental practice, having an inflow line (2) that can be made to communicate with a fresh water union (1), a back-flow-preventing gravity section (4) being provided in the inflow line, and having an inflow control which comprises a metering device (3) and a conveying device (5) and reduces the water pressure in the inflow line (2) upstream of the gravity section (4) and increases the water pressure downstream the gravity section (4), characterised in that the metering device (3) is controlled in such a way that it carries a portion of water to the gravity section (4) only if the conveying device conveys a portion of water from the outlet (14) of the gravity section (4) in the direction of user (10).

2. Device of claim 1, characterised in that the metering device (3) has a positive displacement pump (6) driven by the water pressure.

3. Device of claim 2, characterised in that the metering device (3) has a reciprocating piston (23), a restoring spring (22) counteracting the water pressure, and a 3/2-way valve (51) which in alternation connects either the fresh water connection (1) to the metering device (3) or the metering device (3) to the inflow (21) of the gravity section (4).

4. Device of claim 3, characterised in that the reciprocating piston (23) is embodied as a flexible diaphragm (30) retained at its periphery in the pump housing (7).

5. Device of claim 1, characterised in that the metering device (3) has a pair of positive displacement pumps, and the two positive displacement pumps are coupled to pump in alternation.

6. Device of claim 1, characterised in that each reciprocating piston (23) divides the pump housing (7) into a first and a second pump chamber (8, 9), and each first pump chamber (8) forms one part of the metering device (3) and each second pump chamber (9) forms one part of the conveying device (5).

7. Device of claim 6, characterised in that the second pump chamber (9) includes the restoring spring (22), and one check valve each (17, 18), is provided in its inflow conduit (19) connected to the outlet (14) of the gravity section (4) and in the outflow conduit (20).

8. Device of one of claims 1-7, characterised in that the outlet (15) of a supplementary medium container (16) discharges into the outlet (14) of the gravity section (14).

9. Device of claim 8, characterised in that the conveying device (5) has a second 3/2-way valve (52), which connects the outlet (14) of the gravity section (4) or the outlet (15) of the supplementary medium container (16) to the second pump chamber (9).

10. Device of claim 6, characterised in that the reciprocating piston (6) has two spaced-apart positive displacement plates, in particular diaphragms, between which leak indicating means are provided.

11. Device of one of claims 1-9, characterised in that the two pump chambers (8, 9), the gravity section (4), the supplementary medium container (16) and the 3/2-way valves (51, 52) are combined in one structural unit (13).

12. Device of claim 11, characterised in that the structural unit (13) has a block in which bores, extending in particular at right angles to the outer faces and merging with one another in the interior, form pipeline conduits (60-76, 91-99) and the pump chambers (8, 9).

## Revendications

1. Dispositif pour alimenter au moins un consommateur (10) en eau fraîche, en particulier sur un poste de traitement de dentiste, avec une conduite d'arrivée (2) pouvant être reliée à un branchement d'eau fraîche (1), dans laquelle il est prévu une section de chute libre (4) empêchant le reflux, et avec une commande d'arrivée présentant un système de dosage (3) et un système d'acheminement ultérieur (5), qui réduit la pression d'eau dans la conduite d'arrivée (2) avant la section de chute libre (4) et l'augmente après la section de chute libre (4), caractérisé en ce que le système de dosage est commandé de telle façon qu'il ne transmet chaque fois une portion d'eau à la section de chute libre (4), que lorsque le système d'acheminement ultérieur achemine une portion d'eau de la sortie (14) de la section de chute libre (4) en direction du consommateur (10).

2. Dispositif selon la revendication 1, caractérisé en ce que le système de dosage (3) présente une pompe volumétrique (6) entraînée par la pression d'eau.

3. Dispositif selon la revendication 2, caractérisé en ce que le dispositif de dosage (3) présente un piston élévateur (23), un ressort de rappel (22) agissant dans le sens contraire à la pression d'eau et un distributeur 3/2, qui relie alternativement le branchement d'eau fraîche (1) au système de dosage (3) ou le système de dosage (3) à l'arrivée (21) de la section de chute libre (4).

4. Dispositif selon la revendication 3, caractérisé en ce que le piston élévateur (23) est conçu comme une membrane (30) flexible et maintenue sur sa périphérie dans le corps de pompe (7).

5. Dispositif selon la revendication 1, caractérisé en ce que le système de dosage (3) présente une paire de pompes volumétriques, et les deux pompes volumétriques sont couplées en alternance pour le refoulement.

6. Dispositif selon la revendication 1, caractérisé en ce que chaque piston élévateur (23) subdivise le corps de pompe (7) en une première et une deuxième chambre de pompe (8,9), et chaque première chambre de pompe (8) forme une partie du système de dosage (3) et chaque deuxième chambre de pompe (9) une partie du système d'acheminement ultérieur (5).

7. Dispositif selon la revendication 6, caractérisé en ce que la deuxième chambre de pompe (9) contient le ressort de rappel (22) et qu'une vanne antiretour (17,18) est prévue dans son canal d'arrivée (19) raccordée à la sortie (14) de la section de chute libre (4) de même que dans le canal de sortie (20).

8. Dispositif selon l'une des revendications 1 à 7, caractérisé en ce que la sortie (15) d'un réservoir de produit d'addition (16) débouche dans la sortie (14) de la section de chute libre (4).

9. Dispositif selon la revendication 8, caractérisé en ce que le système d'acheminement ultérieur (5) présente un deuxième distributeur 3/2 (52) qui relie la sortie (14) de la section de chute libre (4) ou la sortie (15) du réservoir de produit d'addition (16) à la deuxième chambre de pompe (9).

10. Dispositif selon la revendication 6, caractérisé en ce que le piston élévateur (6) présente deux plaques de déplacement espacées l'une de l'autre, en particulier des membranes, entre lesquelles sont prévus des indicateurs de fuite.

11. Dispositif selon l'une des revendications 1 à 9, caractérisé en ce que les deux chambres de pompe (8,9), la section de chute libre (4), le réservoir de produit d'addition (16) et les distributeurs 3/2 (51,52) sont regroupés dans un module (13).

12. Dispositif selon la revendication 11, caractérisé en ce que le module (13) présente un bloc dans lequel en particulier des perçages perpendiculaires aux surfaces extérieures et se confondant à l'intérieur forment des conduites (60 à 76, 91 à 99) et les chambres de pompe (8,9).
